# EUROPEAN PATENT APPLICATION

(11) **EP 2 592 450 A1**
(43) Date of publication of application: **15.05.2013**
(21) Application number: 12178616.4
(22) Date of filing: 31.07.2012
(51) Int. Cl.: G02B 6/293, G02B 6/34

(54) **Optical module**

(30) Priority: 09.11.2011 JP 2011245317
(71) Applicant: Furukawa Electric Co., Ltd., Chiyoda-ku Tokyo 100-8322 (JP)
(72) Inventor: Matsuura, Hiroshi, Chiyoda-ku, Tokyo 100-8322 (JP); Takagi, Takeshi, Chiyoda-ku, Tokyo 100-8322 (JP); Abe, Satoru, Chiyoda-ku, Tokyo 100-8322 (JP)
(74) Representative: advotec.

(57) **Abstract**

There is provided an optical module (10) that is capable of reducing influences of expansion or contraction of adhesive caused by temperature changes on optical characteristics of the optical module in which an optical element such as prism (16) is fixed by the adhesive.

An adhesive applying area to which the adhesive is applied to fix the prism (16) is set in an area other than an area right under or above optical axes of beams transmitting within the prism (16). Thereby, it becomes possible to provide the optical module (19) which is hardly influenced by the changes of the environmental temperature by reducing influence of strain caused by the expansion or contraction of the adhesive due to the temperature change otherwise exerted on the incident beam.

## Description

### BACKGROUND OF THE INVENTION

### Field of the Invention

The present invention relates to an optical module for use in optical communication systems, optical measurement fields and others.

### Related Art

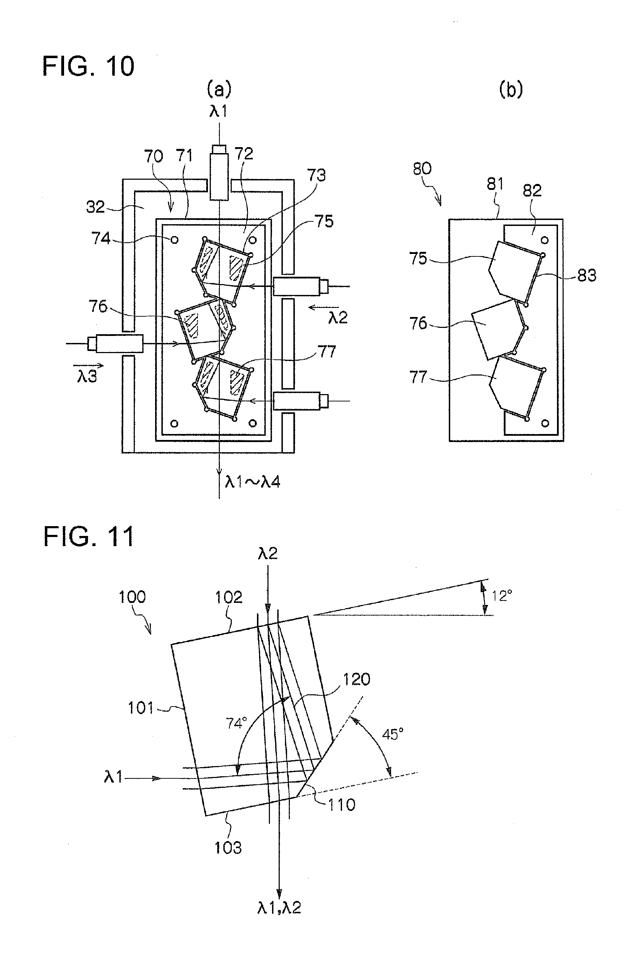

Lately, with the background of rapid dissemination of broadband, studies for increasing speed of optical transmission systems are being actively carried out. An optical module using optical elements such as a prism is used in such optical transmission system. For instance, Patent Document 1 proposes an optical multiplexing and demultiplexing module using prisms for multiplexing or demultiplexing beams of a plurality of wavelengths. The optical multiplexing and demultiplexing module (optical multiplexer/demultiplexer) in Patent Document 1 uses a prism 100 having an inclined face 110 formed by cutting one corner of a rectangular parallelepiped or cubic prism with an angle of 45 degrees with respect to an end face in contact with the corner as shown in FIG. 11. The prism 100 has also a first end face 101, a second end face 102 and a third end face 103. Antireflective coatings (AR coating) are applied to the first end face 101 and the third end face 103 and a reflective coating (HR coating) that reflects a beam incoming through the first end face 101 is applied to the inclined face 110. A filter, such as a long wavelength pass filter (LWPF) e. g. , is formed on the second end face 102 and the filter has such wavelength selectivity that reflects only a predetermined wavelength ('a first incident beam' described below) and transmits beams of other wavelengths.

A beam having a wavelength λ1 is inputted as a first incident beam for example to the prism 100 from the first end face 101. The first incident beam having the wavelength λ1 is reflected by the inclined face 110. The reflected light 120 is reflected further by the second end face 102 and then outputted from the third end face 103. Meanwhile, a second incident beam λ2 different from the first incident beam λ1 is inputted from the second end face 102. The second end face 102 is arranged to have the filtering function as the long wavelength pass filter for example having the wavelength selectivity of reflecting on the wavelength λ1 and transmitting beams of the other wavelengths, so that the second incident beam λ2 transmits through the second end face 102.

This kind of arrangement allows The reflected light 120 having the wavelength λ1 and reflected by the filter of the second end face 102 and the second incident beam λ2 transmitting through the second end face 102 to be multiplexed and outputted through the third end face 103. It is noted that incident angles of the first incident beam reflected by the second end face 102 and outputted through the third end face 103 and of the second incident beam inputted from the second end face 102 and outputted through the third end face 103 are adjusted so that those beams become parallel substantially with each other. After being outputted through the third end face 103, they are connected to be input to optical parts such as external optical fibers through an intermediary of a collimate lens and others (not shown).

In a case of demultiplexing, a multiplexed beam having the wavelengths λ1 and λ2 is inputted from the third end face 103 conversely from the case of multiplexing. Although the beam having the wavelength λ2 among the multiplexed beam transmits and is outputted through the second end face 102, the beam having the wavelength λ1 is reflected by the LWPF of the second end face 102, is inputted into the inclined face 110, is reflected by the inclined face 110, and is outputted through the first end face 101. Thus, the beams having the wavelengths λ1 and λ2 are demultiplexed and are outputted respectively from the different end faces.

Then, it becomes possible to obtain such advantageous effects of maintaining the substantial parallel condition of the first and second incident beams and of suppressing a drop of optical coupling performance, even if the prism inclines by an angle θ due to changes of ambient environment such as temperature change, by multiplexing or demultiplexing by repeating two times of reflection by using the prism 100 as described above. That is, even though the first incident beam reflected by the inclined face 110 inclines by 2θ, the inclined angle 2θ is corrected in the opposite angle by the reflection of the second end face 102. Accordingly, only the incident beam shifts predetermined distance in parallel in a transverse direction and the angle of the incident beam can be maintained.
The prism 100 is strongly fixed to a base of a case by adhesive or the like to optically-couple with optical fibers accurately to prevent from changing the position of the prism due to vibrations and other external force.

### [PRIOR ART DOCUMENT]

### [PATENT DOCUMENT]

[Patent Document 1] Japanese Patent Application Laid-open No. 2010-122439

### [Problems to be Solved by the Invention]

In the prior art technologies such as Patent Document 1, the whole lower face of the prism 100 is fixed to the base of the case with the adhesive whose coefficient of thermal expansion is different from that of the prism. The prism 100 causes small strain within it as the adhesive expands or contracts according to fluctuation of environmental temperature. As a result, the prior art technology has a problem that optical characteristics of the prism become unstable along with the changes of the environmental temperature. It was found in particular that the strain of the prism caused by the expansion or contraction of the adhesive right under optical axes of transmission light transmitting within the prism 100 markedly affects the optical characteristics.
Such influence of strain caused by the adhesive for fixing an optical element such as the prism is a common problem not only for the optical multiplexer/demultiplexer exemplified in Patent Document 1 but also for optical modules using an optical element such as a prism through which beams are transmitted and processed.

### SUMMARY OF THE INVENTION

Accordingly, the present invention aims at solving the aforementioned prior art problems by providing an optical module capable of preventing a prism from being affected by the strain caused by expansion or contraction of the adhesive in accordance with changes of environmental temperature, of hardly being influenced by the changes of the environmental temperature and of maintaining stable operations.

### [Means for Solving the Problems]

In order to solve the aforementioned problems, according to a first aspect of the invention, there is provided an optical module, comprising:
a case at least having side walls for fixing optical fibers and a fixing surface for fixing a prism;
the prism disposed so as to transmit incident light (beams) inputted from the optical fibers or so as to reflect therein; and
a prism fixing portion for fixing the prism to the case by using adhesive; **characterized in that**
the prism fixing portion is configured by applying the adhesive to an adhesive applying area other than an area right under or above optical axes of beams propagating within the prism.

According to the optical module of another aspect of the invention, the prism fixing portion has at least two or more adhesive applying areas.

According to the optical module of a still other aspect of the invention, the prism fixing portion includes a fixing base plate fixed to the fixing surface of the case and the prism is fixed to the fixing base plate by the adhesive.

According to the optical module of a different aspect of the invention, the prism fixing portion has a clearance groove that limits transverse move of the adhesive near a boundary on the optical axis side of the adhesive applying area to which the prism is adhered.

According to the optical module of a still different aspect of the invention, the clearance groove is provided substantially in parallel with the optical axis of the beam transmitting through the prism and the clearance groove parts the adhesive applying area so that the adhesive applying area does not enter the area right under or above the optical axes.

According to the optical module of a further different aspect of the invention, the clearance groove is a planar clearance groove created by hollowing out the whole area surrounded by the optical axes of the beams transmitting through the prism.

According to the optical module of another different aspect of the invention, the clearance groove is created on the fixing surface of the case.

According to the optical module of a still other different aspect of the invention, the clearance groove is created on the fixing base plate.

According to the optical module of a further different aspect of the invention, the clearance groove is created on an under surface or an upper surface of the prism.

According to the optical module of a more different aspect of the invention, the prism fixing portion has a positioning base plate defining position of the prism.

### [Advantageous Effects of the Invention]

According to the configuration of the invention, the optical axis of the beam propagating within the prism does not pass right above the adhesive fixing part, so that even if the adhesive expands or contracts due to changes of ambient environmental temperature, it becomes possible to suppress its influence on the beam transmitting through the prism and to provide the optical module which is hardly influenced by the changes of the environmental temperature and which has stable optical characteristics.

### BRIEF DESCRIPTION OF DRAWINGS

FIG. 1(a) is a plan view showing an appearance of an optical multiplexing and demultiplexing module which is one embodiment of the invention, FIG. 1(b) is a section view of the optical multiplexing and demultiplexing module shown in FIG. 1(a), and FIG. 1(c) is a section of the optical multiplexing and demultiplexing module seen in a direction of arrows A1 - A1 in FIG. 1(a);
FIG. 2(a) is a plan view for explaining a structure of a prism fixing portion according to one embodiment of the invention and FIG. 2(b) is a partial section view seen in a direction of arrows A2 - A2 in FIG. 2(a);
FIG. 3(a) is a plan view for explaining a structure of the prism fixing portion according to another embodiment of the invention and FIG. 3(b) is a partial section view seen in a direction of arrows A3 - A3 in FIG. 3(a);
FIG. 4(a) is a plan view for explaining a structure of the prism fixing portion according to a still other embodiment of the invention and FIG. 4(b) is a partial section view seen in a direction of arrows A4 - A4 in FIG. 4(a);
FIG. 5(a) is a plan view for explaining a structure of the prism fixing portion according to a further embodiment of the invention and FIG. 5(b) is a partial section view seen in a direction of arrows A5 - A5 in FIG. 5(a);
FIG. 6(a) is a plan view for explaining a structure of the prism fixing portion according to a still further embodiment of the invention and FIG. 6(b) is a partial section view seen in a direction of arrows A6 - A6 in FIG. 6(a);
FIG. 7(a) is a plan view for explaining a structure of the prism fixing portion according to a different embodiment of the invention and FIG. 7(b) is a partial section view seen in a direction of arrows A7 - A7 in FIG. 7(a);
FIG. 8(a) is a plan view for explaining a structure of the prism fixing portion according to a still different embodiment of the invention and FIG. 8(b) is a partial section view seen in a direction of arrows A8 - A8 in FIG. 8(a);
FIG. 9(a) is a plan view for explaining a structure of the prism fixing portion according to a further different embodiment of the invention and FIG. 9(b) is a partial section view seen in a direction of arrows A9 - A9 in FIG. 9(a);
FIG. 10(a) is a plan view showing an optical module in an uncovered condition according to the other embodiment of the invention and FIG. 10(b) is a plan view showing the prism fixing portion of the other embodiment; and
FIG. 11 is a plan view for explaining a function of a prism of a prior art optical module.

### DETAILED DESCRIPTION OF PREFEDRRED EMBODIMENTS

Embodiments of the invention will be explained with reference to the drawings. While an optical multiplexing and demultiplexing module will be explained as one example of the optical module of the invention, the invention is not limited to the optical multiplexing and demultiplexing module and is widely applicable to optical modules in which an optical element such as a prism is fixed by means of adhesive.

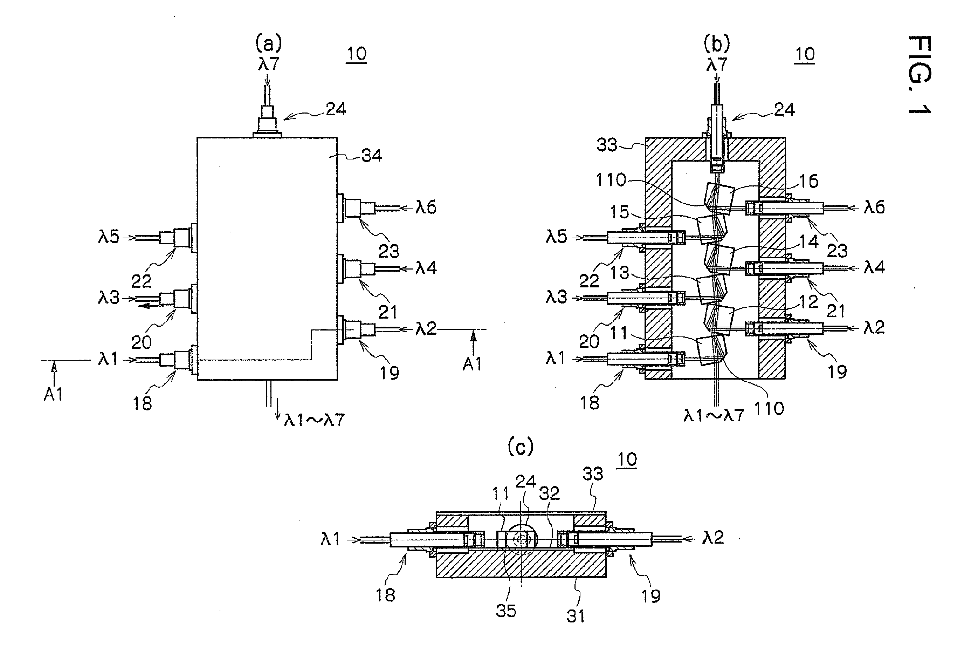

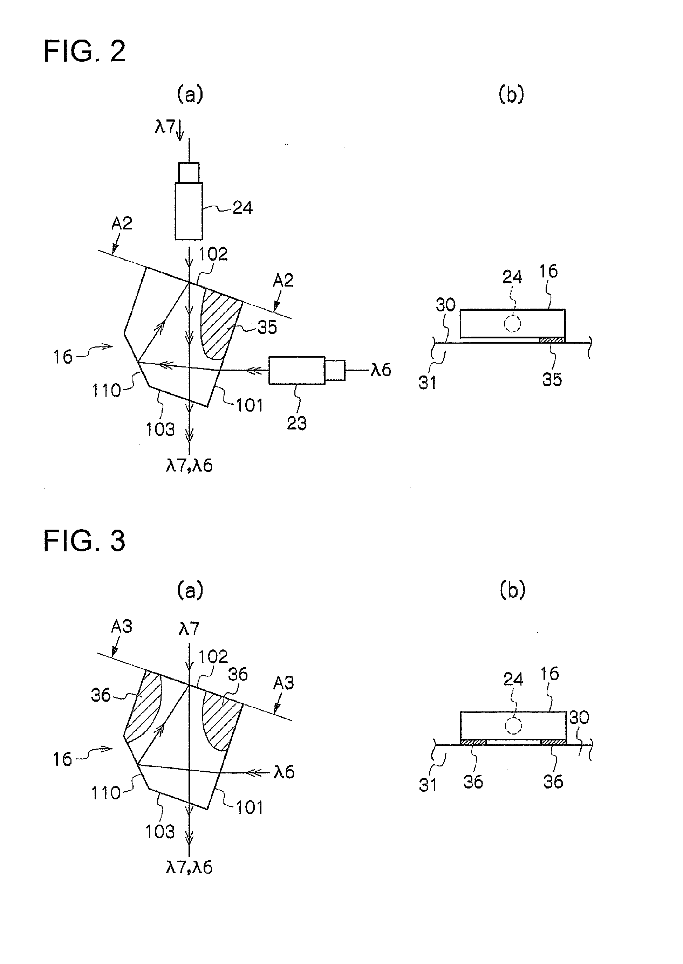

FIGs. 1(a), 1(b) and 1(c) are, respectively, a plan view, a plan view in section and a front view in section. FIG.1 shows an appearance of the optical multiplexing and demultiplexing module, Fig.1(b) shows its sectional structure of a plan view and FIG 1(c) shows its sectional structure of front view. FIGs. 2 through 8 are plan and section views showing a prism fixing portion of one embodiment of the invention.

That is, FIG. 1(a) is a plan view showing the appearance of an optical multiplexing and demultiplexing module 10 which is one embodiment of the invention, FIG. 1(b) is a section view of the optical multiplexing and demultiplexing module shown in FIG. 1(a) and FIG. 1(c) is a section of the optical multiplexing and demultiplexing module seen in the direction of arrows A1 - A1 in FIG. 1(a). As shown in FIG. 1(b), the optical multiplexing and demultiplexing module 10 has a plurality of prisms in each of which an inclined face is formed by cutting one of right-angled four corners of a transparent parallel-piped glass plate with an angle of 45 degrees with respect to end faces similarly to one of the prior art shown in FIG. 11.

The optical multiplexing and demultiplexing module 10 has a case 30 for storing a plurality of prisms 11 through 16, a plurality of collimator units 18 through 24 having collimating lenses that collimates beams having different wavelengths and input individually to the respective prisms 11 through 16 and a cover 34. The case 30 is composed of a bottom 31 and a side wall 33 and the collimator units 18 through 24 are fixed to the side wall 33. Each prism has sides whose length is around 5 to 10 mm and a thickness around 3 mm, and has a structure and function similar to the prism 100 shown in FIG. 11. The same reference numerals with those used for the prism 100 shown in FIG. 11 will be used for an inclined face and for first through third end faces of the prisms 11 through 16.

The prisms 11 through 16 are disposed within the case 30 as shown in FIG. 1(b) and under surfaces of the prisms 11 through 16 are fixed to the bottom surface 32 of the case 30 by means of adhesive at a prism fixing portion 35 as shown in FIG. 1(c). The case 30 storing the prisms 11 through 16 is enclosed by the cover 34 to protect the prisms 11 through 16 and others. The prisms 11 through 16 multiplex and demultiplex incident beams by transmitting incident beams and by reflecting predetermined incident beams within the prisms. Accordingly, positions of the prisms 11 through 16 and of the collimator units 18 through 24 are accurately adjusted. However, the beams transmitting through the prisms 11 through 16 are ill-affected if strain and others occur within the prisms due to temperature changes of its environment.

The present invention aims at providing an optical module that is hardly affected by the temperature change by suppressing or controlling the strain of the prisms caused by expansion or contraction of the adhesive fixing the prisms 11 through 16 that occurs along with the temperature change of the environment. To that end, how the incident beams 1λ through λ7 transmit through what kinds of passes within the prisms 11 through 16 will be explained first.

A first beam (first incident beam) each having a different single wavelength λ1 through λ6 per prism is incident on each of the plurality of prisms 11 through 16 from the first end face 101. The first incident beam λ6 inputted to the first end face 101 of the prism 16 transmits from the first end face 101 to the inclined face 110 and is reflected by the inclined face 110. The first incident beam λ1 reflected by the inclined face 110 is reflected again by the LWPF of the second end face 102 and is outputted out of the third end face 103 (see FIG. 11). Meanwhile, the second incident beam λ7 is inputted from the collimator unit 24 through the second end face 102 of the prism 16.

The wavelengths of the beams inputted to the prisms 11 through 16 have a relationship of λ1 < λ2 < λ3 < λ4 < λ5 < λ6 < λ7 and the LWPF (long wavelength pass filter) is formed on the second end face 102. Accordingly, the second end face 102 of each of the prisms 11 through 16 reflects the first incident beam but transmits the second incident beam, respectively. Accordingly, the first and second incident beams are multiplexed sequentially from λ7 to λ1 in the respective prisms and a wavelength multiplex beam in which the incident beams λ1 through λ7 are multiplexed is outputted out of the second end face 102 of the prism 11. This wavelength multiplexed beam is coupled to an external optical fiber or the like through an intermediary of an external collimator lens (not shown).

When a wavelength multiplexed beam in which beams λ1 through λ7 are multiplexed is converted into a collimate beam and is incident on the third end face 103 of the prism 11 in contrary, the beam transmits passes opposite from the case of the multiplexing described above. Accordingly, collimated beams of λ1 through λ6 are outputted individually out of the first end face 101 of the prisms 11 through 16 and a collimated beam of λ7 is outputted out of the second end face 102 of the prism 16.

The prisms 11 through 16 and the collimator units 18 through 24 that input the first incident beams λ1 through λ6 and the second incident beam λ7 are rigidly fixed by accurately adjusting their positions. Since the prisms 11 through 16 need to be strongly fixed and accurately positioned in particular, they are fixed to the bottom surface 32 of the case 30 by means of adhesives.
However, a coefficient of thermal expansion of the adhesive is different from that of the prism, strain is applied to the prism when the environmental temperature changes due expansion or contraction of the adhesive.
It was then found that the strain on optical axes of the beams transmitting through the prism is most influential. Accordingly, a basic idea of the present invention is to adhere and fix the prism by applying the prism-fixing-adhesive in areas other than areas right under or above the optical axes of the beams transmitting within the prism. It is noted that although the present description will be explained by exemplifying the case when the prism is fixed to the bottom surface 32, it is also possible to arrange so as to provide the cover at an under surface of the case and to fix the prism on an upper surface of the case.

Various embodiments for fixing the prism on the bottom surface 32 of the case 30 will be explained below with reference to FIGs. 2 through 10. The case of fixing one prism 16 will be explained in the following embodiments, except a special case, it is applicable to any one of the other prisms 11 through 15 of the optical multiplexing and demultiplexing module 10. It is also noted that the bottom surface 32 of the case 30 is not shown to simplify the drawings in FIGs. 2a through 10a and the collimator units 23 and 24 are also omitted in FIGs. 3 through 10. FIGs. 2(b) through 9(b) are section views taken along the lines Ax - Ax (x = 2 through 9) respectively shown in FIGs. 2(a) through 9(a).

FIG. 2(a) shows a mounted condition and an adhesive part of the prism 16 used in the optical module of the invention. The shaded part is an area to which the adhesive is applied. The incident beams λ7 and λ6 inputted from the collimator units 24 and 23 as described above propagate within the prism 16 by being transmitted, reflected and refracted. A shape of the prism 16 shown here is one exemplary prism used in the present embodiment and is a pentagonal column formed by cutting one corner from a columnar glass block having a square or rectangular section whose one side is around 5 to 10 mm and a height of several mm. The long wavelength pass filter is formed on the side surface of the second end face 102 of the prism 16 and a high reflection film (HR film) that reflects incident beams with reflectivity almost close to total reflection is formed on the side surface of the inclined face 110 from which the corner had been cut, respectively by a dielectric multilayer film and the like. It is also preferable to form antireflective films on the first and third end faces 101 and 103.

As shown in FIG. 2(a), the beam of wavelength λ7 is incident on the prism 16 by transmitting through the LWPF film of the second end face 102. Still more, the first incident beam having the wavelength λ6 whose wavelength is shorter than that of the λ7 is incident toward the HR-coated inclined face 110 from the collimator unit 23 on the right side so as to transmit through the first end face 101 and to be almost orthogonal to the optical axis of the incident beam of the wavelength λ7. The beam of the wavelength λ7 incident from the second end face 102 transmits within the prism and is outputted through the third end face 103 at the lower part in the drawing. The beam of the wavelength λ6 incident from the first end face 101 is reflected by the HR-coating of the inclined face and by the LWPF of the second end face 102, advances substantially on the same optical axis with that of the beam of the λ7 and is outputted through the third end face 103. It is noted that the incident beams of the respective wavelengths λ7 and λ6 inputted from the outside are incident substantially as a parallel beam by the fiber collimators 24 and 23.

FIG. 2(b) is a section view along a line A2 - A2 in FIG. 2(a). It is noted that only a fixing part to which the adhesive is applied is hatched to facilitate understanding of the invention. The same applies also to FIGs. 3 through 10 below. FIG. 2 shows a configuration in which the prism is fixed to the bottom surface 32 of the case 30 by applying the adhesive to one place provided on the bottom surface 32 of the case 30. In this configuration, an adhesive applied area 35 becomes a prism fixing portion 35 as it is. The prism fixing portion 35 is provided in the area avoiding the areas right under the optical axes of the beams propagating within the prism and no adhesive is applied right under the prism. Thereby, even if the environmental temperature around the optical module fluctuates, stress caused by expansion or contraction of the adhesive part will not apply even small strain to the prism. Accordingly, it becomes possible to always obtain stable characteristics. It is noted that the adhesive is applied by selecting to one place whose area is widest while avoiding the areas right under the optical axes in FIG. 2. An epoxy thermoset adhesive (EPOTECH 353 ND, TRA-BONDF 253) and others is used for example as the adhesive.

Another embodiment of the invention shown in FIGs. 3(a) and 3(b) show an example in which two adhesive applying areas 36 are provided. According to this embodiment, the two adhesive applying areas as a prism fixing portion as a whole. When a plurality of adhesive applying areas is to be provided, it is desirable to provide the adhesive applying areas 36 on the outside of an area (a triangular area in this case) sandwiched by a plurality of optical axes as shown in FIG. 3(a) because the prism 16 is more stably fixed.

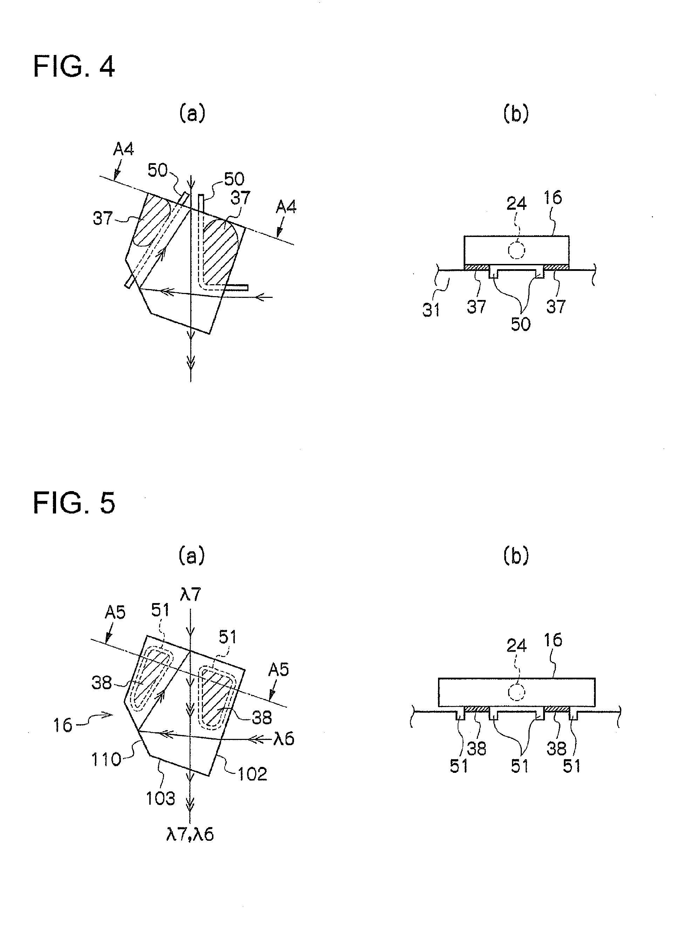

FIGs. 4 through 10 show still other embodiments.
The embodiment shown in FIGs. 4a and 4b show a configuration in which two linear adhesive clearance grooves 50 are formed on the bottom surface 32 of the case 30 to part adhesive applying areas 37 so as to located on the outside of the area sandwiched by the plurality of optical axes. Thereby, it becomes possible to block the adhesive from entering the area sandwiched by the plurality of optical axes by crossing over the adhesive clearance grooves 50, so that it becomes possible to apply the adhesive only to the predetermined fixing area with simpler works. The two sets of the adhesive applying areas 37 and the clearance grooves 50 correspond to the prism fixing portion in this embodiment.

The embodiment shown in FIGs. 5a and 5b show a configuration in which adhesive applying areas 38 are provided on the outside of the area sandwiched by the plurality of optical axes and linear clearance grooves 51 are formed so as to surround the adhesive applying areas 38. Thereby, the adhesive is applied within the areas surrounded by the linear clearance grooves 51. Accordingly, it becomes possible to form each adhesive applying area 38 extremely stably and to suppress the environmental temperature characteristics of the optical module to be very small. The two sets of the adhesive applying areas 38 and the linear clearance grooves 51 configure the prism fixing portion also in this case.

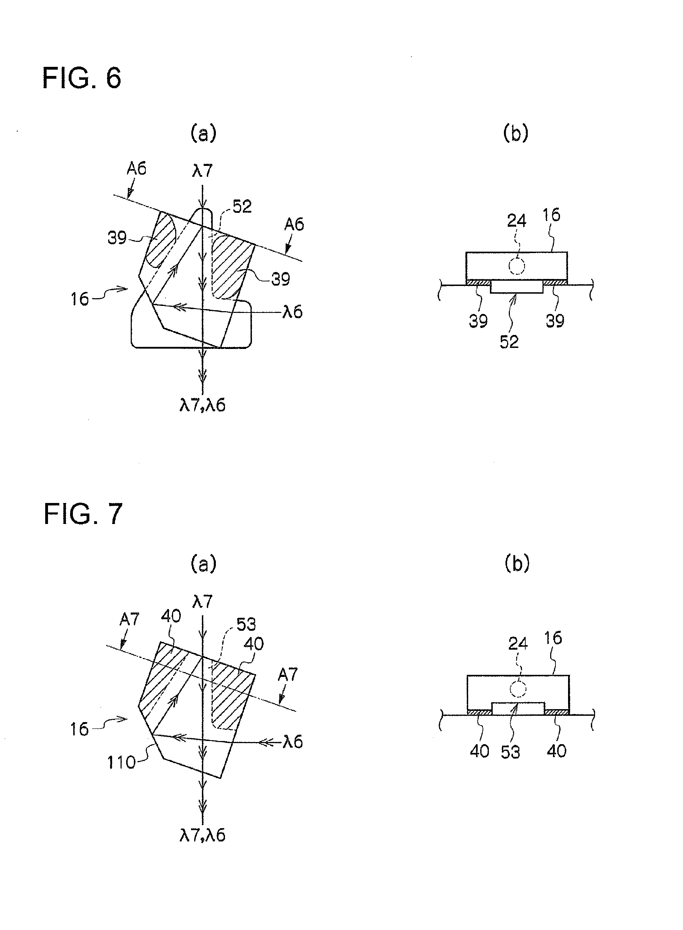

The embodiment shown in FIGs. 6a and 6b show a configuration in which a planar clearance groove 52 where the whole area sandwiched by the plurality of optical axes becomes the clearance groove is formed on the bottom surface 32 of the case 30. Parts on the outside of the planar clearance groove 52 located above are adhesive applying areas which mainly contribute for the adhesion. The area right under the optical axes is the planar clearance groove 52 to which no adhesive is applied, so that it becomes possible to prevent strain otherwise from occurring due to the temperature change of the adhesive in the optical axis part. The planar clearance groove 52 and the adhesive applying areas configure the prism fixing portion in the present embodiment.

The embodiment shown in FIGs. 7a and 7b show a configuration in which the planar clearance groove 52 as shown in FIG. 6 is formed on an under surface of the prism 16. Similarly to the embodiment shown in FIG. 6, adhesive applying areas 40 are formed on the outside of the planar clearance groove 52. The adhesive applying areas 40 and the planar clearance groove 52 configure the prism fixing portion. It is noted that it is also possible to form the clearance grooves shown in FIGs. 4 and 5 on the under surface of the prism 16 similarly to the present embodiment. This applies also to embodiments using a fixing base plate explained below.

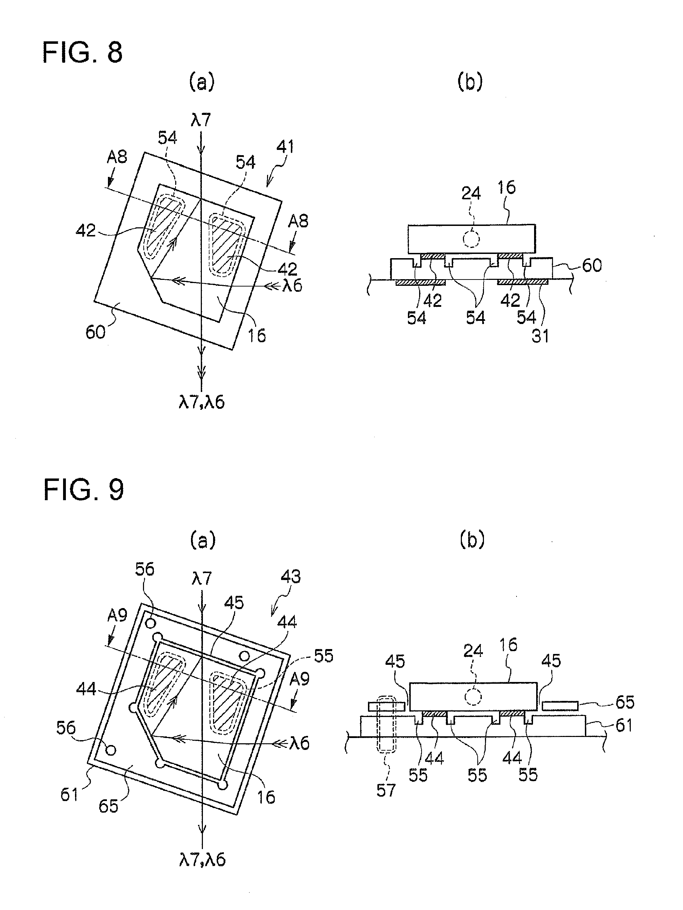

The embodiment shown in FIGs. 8a and 8b show a configuration of a prism fixing portion 41 in which a fixing base plate 60 is mounted on the bottom surface 32 of the case 30 of the optical module package and the prism 16 is fixed thereon by the adhesive. The fixing base plate 60 is fixed to the bottom surface 32 of the package case by means of adhesive, soldering, welding and others. It is noted that it is preferable to apply the adhesive so as to avoid the area right under the optical axes of the beams propagating within the prism similarly to the cases of the embodiments described above even when the fixing base plate 60 is fixed to the bottom surface 32.

Moreover, it is desirable to have a plurality of adhesive applying areas 42 for adhering the fixing base plate 60 to the bottom surface 32 in one fixing base plate 60 and to provide adhesive applying areas 42 on the outside of the area sandwiched by the plurality of optical axes in order to assure strength of this structure. Here, adhesive clearance grooves 54 are provided so as to avoid the area right under or above the optical axes to part adhesive applying areas 42 in advance and to apply the adhesive within the parted area as shown in the respective embodiments shown in FIGs. 2 through 7.

A prism fixing portion 43 of an embodiment shown in FIG. 9 has a positioning base plate 65 in addition to a fixing base plate 61 in the configuration in FIG. 8. The positioning base plate 65 has a fitting hole 45 hollowed out so as to fit the prism 16 at predetermined position. The positioning base plate 65 is mounted on and fixed to the fixing base plate 61. While the prism 16 is fitted into the fitting hole 45 of the positioning base plate 65 and is fixed thereto by the adhesive, it is also possible to provide clearance grooves 55 on the fixing base plate 61 or on the under surface of the prism 16 similarly to the respective embodiments in FIGs. 2 through 7. The positioning base plate 65 can be obtained by perforating the fitting hole 45 on a surface of a metal plate such as stainless steel of 0.1 to 0.3 mm thick by machining by laser, cutting and the like and then by deburring edges of the positioning base plate 65 and peripheral portions of the fitting hole 45. It becomes possible to fix the prism 16 accurately while adhering on the fixing base plate 61 by providing the positioning base plate 65 as described above. It is noted that the prism 16 can be adhered to the fixing base plate 61 more simply by creating the fitting hole 45 by etching because no bur is produced.

The prism 16 is positioned by fitting into the fitting hole 45 formed through the positioning base plate 65 and is fixed to the fixing base plate 61 by the adhesive in this embodiment. Here, it is possible to arrange so that the fixing base plate 61 and the positioning base plate 65 are fixed by providing pin holes 56 respectively at predetermined positions and by fitting pins 57 as indicated by a broken line in FIG. 9b into the holes and by fixing to the bottom surface of the case by adhesive, soldering, welding and other after that. It is also possible to provide a hardened elastic material having rubber elasticity after hardening such as RTV rubber at least at one place of the fitting hole 45 so as to fill up a gap with the facing prism. Thereby, it becomes possible to rigidly fix the prism so that the prism is not readily dislocated from the fixing base plate even if the environmental temperature fluctuates or an external impact is applied.

It is possible to fix the plurality of prisms to the bottom surface 32 of the package (case) readily and accurately by disposing the plurality of fixing base plates 61 for fixing the prisms and the plurality of positioning base plates 65 at predetermined positions of the bottom surface 32 of the package. Note that it may be also provide pin holes at predetermined positions of the fixing base plate 61 and/or the positioning base plate 65 and to provide pin holes and/or pins also on the bottom surface of the case to position the fixing base plate and the positioning base plate within the optical module package by using the pins. Thereby, it becomes much easier to facilitate positioning of the prism further.

The present invention is advantageous in particular in the optical module in which the plurality of prisms is disposed in series as illustrated in FIG. 1. As an embodiment of the prism fixing portion usable in such optical module having the plurality of prisms, FIG. 10(a) illustrates a prism fixing portion 70 using three prisms.
In the optical module shown in FIG. 10(a), the three prisms 75 through 77 are disposed longitudinally with each other while inverting orientations thereof with respect to a center axis of the package similarly to FIG. 1. Since the multiplexing and demultiplexing operations of this optical module are the same with those explained in connection with FIG. 1, the operations of the optical module will not be explained further.

The prism fixing portion 70 of the embodiment shown in FIG. 10(a) has a fixing base plate 71 and a positioning base plate 72. The positioning base plate 72 has a fitting hole 73 formed by following a shape into which the plurality of longitudinally disposed prisms 75 through 77 is disposed. That is, the planar shape of the fitting hole 73 is similar to whole shape (planer shape) of prisms 75 through 77. The three prisms 75 through 77 are fitted into the fitting hole 73 and are disposed accurately to predetermined positions on the bottom surface 32 of the case together with the fixing base plate 71. After inserting pins (not shown) to pin holes 74, the fixing base plate 71 and the positioning base plate 72 are fixed by fixing means such as adhesive, soldering and welding. Thus, the prism fixing portion of the present embodiment is configured so that the plurality of prisms can be very easily disposed at the predetermined positions.

As another embodiment of the prism fixing portion for fixing the plurality of prisms, FIG. 10(b) shows a prism fixing portion 80 provided with a positioning base plate 82 having prism butting portions 83 instead of the fitting holes 73. The positioning base plate 82 having the butting portion 83 formed by following right-edge shapes of the plurality of longitudinally disposed prisms 75 through 77 is provided on the right side in the present embodiment , so that the plurality of prisms can be readily positioned by butting them to the butting portion 83.

The configurations in which the respective components of the respective embodiments described above are appropriately combined are what the invention intends and fall within a scope of technological thought of the present invention. For instance, it is possible to combine such configurations that the adhesive applying portion is provided so as to avoid the area right under the optical axes, that the clearance grooves are provided above the fixing base plate or on the under surface of the prism to suppress the adhesive from entering the area right under the optical axes from the adhesive applying portion in the prism fixing portion used for the plurality of prisms. Still more, although the configuration in which the fixing base plate and the positioning base plate are combined in the embodiments described above, it is also possible to provide a configuration in which only the positioning base plate is disposed and fixed directly to a bottom surface portion of the case. Thus, an optical module having a stable characteristic against to the change of the environmental temperature can be obtained.

It is noted that in each embodiment described above, the optical characteristics can be stabilized further by limiting the area of the adhesive applying part after fixing the prism to be within 1 mm² per one point on each fixing base plate. When there is a plurality of points to be adhered on one fixing base plate, it is desirable to limit the number of the point having an area of 1 mm² or more to one or less.

Although the prisms substantially having the same shape have been described in the embodiments described above, the invention is not limited to such case. Even if the shape of the prism is changed, the configurations of providing the adhesive applying part on the outside of the area sandwiched by the plurality of optical axes and of bringing the same effects with the present invention by the other features of the present invention fall within the technological scope of the invention.

Still more, although the cases of fixing the prisms on the bottom surface of the case in the embodiments described above, it is also possible to fix the prisms on the upper surface of the case. This case is configured so that the adhesive applying area is provided in the area other than the area right above the optical axes.

Still more, although the embodiments employing the optical module using the six prisms and the optical module using the three prisms have been explained above, the number of prisms may be any number and the optical module may be what having one prism.

### [DESCRIPTION OF REFERENCE NUMERALS]

- 10: optical multiplexing and demultiplexing module
- 11 through 16: prism
- 18 through 24: collimator unit
- 30: case
- 31: bottom
- 32: bottom surface
- 33: side wall
- 35, 36, 39, 40, 41, 70: prism fixing portion
- 37, 38: fixing area
- 50 through 53: clearance groove
- 60, 61, 71: fixing base plate
- 65, 72, 82: positioning base plate
- 100: prism
- 101: first end face
- 102: second end face
- 103: third end face

## Claims

1. An optical module, comprising:
a case (30) at least having side walls for fixing optical fibers and a fixing surface for fixing a prism;
the prism (16) disposed so as to transmit incident beams inputted from said optical fibers or so as to reflect therein; and
a prism fixing portion (37) for fixing said prism (16) to said case (30) by using adhesive; **characterized in that**
said prism fixing portion (37) is configured by applying the adhesive to an adhesive applying area other than an area right under or above optical axes of beams propagating within said prism.

2. The optical module according to Claim 1, **characterized in that** said prism fixing portion has at least two or more adhesive applying areas.

3. The optical module according to Claim 1 or 2, **characterized in that** said prism fixing portion includes a fixing base plate fixed to the fixing surface of said case and said prism is fixed to said fixing base plate by adhesive.

4. The optical module according to any one of Claims 1 through 3, **characterized in that** said prism fixing portion has a clearance groove (50) that limits transverse move of the adhesive and the clearance groove (50) is provided near a boundary on the optical axis side of said adhesive applying area to which said prism is adhered.

5. The optical module according to Claim 4, **characterized in that** said clearance groove is provided substantially in parallel with the optical axis of the beam transmitting through said prism to part said adhesive applying area so that said adhesive applying area does not enter the area right under or above said optical axis.

6. The optical module according to Claim 4, **characterized in that** said clearance groove is a planar clearance groove created by hollowing out the whole area surrounded by the optical axes of the beams transmitting through said prism.

7. The optical module according to any one of Claims 4 through 6, **characterized in that** said clearance groove is created on said fixing surface of said case.

8. The optical module according to any one of Claims 4 through 6, **characterized in that** said clearance groove is created on said fixing base plate.

9. The optical module according to any one of Claims 4 through 6, **characterized in that** said clearance groove is created on an under surface or an upper surface of said prism.

10. The optical module according to any one of Claims 1 through 9, **characterized in that** said prism fixing portion has a positioning base plate defining position of said prism.
